## Europäisches Patentamt
## European Patent Office
## Office européen des brevets

(19)

(11) Numéro de publication: **0 072 297**
**B1**

(12)

# FASCICULE DE BREVET EUROPEEN

(45) Date de publication du fascicule du brevet:
**22.05.85**

(51) Int. Cl.⁴: **H 02 K 23/04, H 02 K 23/02**

(21) Numéro de dépôt: **82401414.6**

(22) Date de dépôt: **29.07.82**

(54) **Machine électrique à courant continu, à entrefer cylindrique et à excitation permanente.**

(30) Priorité: **06.08.81 FR 8115289**
**09.02.82 FR 8202061**

(43) Date de publication de la demande:
**16.02.83 Bulletin 83/7**

(45) Mention de la délivrance du brevet:
**22.05.85 Bulletin 85/21**

(84) Etats contractants désignés:
**BE DE FR IT SE**

(56) Documents cités:
**DE - A - 2 947 670**
**FR - A - 1 407 904**
**FR - A - 2 386 179**
**US - A - 3 840 763**
**US - A - 4 141 137**
**US - A - 4 150 312**

(73) Titulaire: **CEM COMPAGNIE ELECTRO-MECANIQUE,
12, rue Portalis, F-75383 Paris Cédex 08 (FR)**

(72) Inventeur: **Mercier, René, 65, Avenue du Lac,
F-21000 Dijon (FR)**

(74) Mandataire: **de Boisse, Louis, 37, Avenue Franklin D.
Roosevelt, F-75008 Paris (FR)**

ACTORUM AG

## Description

La présente invention concerne une machine électrique à courant continu dont le stator est formé de tôles empilées, avec entrefer cylindrique et excitation permanente obtenue an moyen de plaquettes aimantées qui sont avantageusement, quoique non obligatoirement, à base de terres rares et notamment en samarium-cobalt.

Grâce à leurs qualités magnétiques — lesquelles sont très supérieures à celles des aimants classiques — les aimants à base de terres rares permettent aux moteurs à courant continu qui en sont équipés, d'atteindre de très hautes performances. Mais en contrepartie, la mise en œuvre de tels aimants se heurte à de multiples inconvénients tels que difficultés d'approvisionnement en «tuiles» ou pièces cintrées à la forme exacte du pôle, fragilité de celles-ci, caractère délicat de leur montage et aimantation in situ.

Aussi a-t-on préconisé d'utiliser plutôt des plaquettes rectangulaires juxtaposées qui sont de configuration géométrique simple et d'un coût réduit.

Conformément à la présente invention, on loge ces plaquettes aimantées dans des fentes à contour polygonal fermé pratiquées dans les tôles empilées formant le stator de la machine à courant continu, ledit contour polygonal arrivant à proximité immédiate de l'une au moins des deux extrémités de la région utile du pôle formant l'entrefer et n'y laissant subsister qu'un isthme de tôle très étroit et par conséquent non susceptible de court-circuiter le flux magnétique inducteur utile.

Il n'est pas sans intérêt d'observer en passant qu'une aussi faible réserve de matière eût été rédhibitoire dans le cas d'un rotor de machine électrique, en raison des contraintes mécaniques dues à la force centrifuge.

Il est vrai qu'on a déjà proposé d'intégrer des plaquettes aimantées rectangulaires au stator de machines électriques à courant continu, et l'on pourra se reporter à cet égard aux DE-A-2 947 670 et US-A-4 141 137.

Mais le DE-A-2 947 670 ne divulgue pas un tel logement de plaquettes aimantées dans des fentes à contour polygonal fermé laissant subsister un isthme de matière. On se trouve ici en présence d'un circuit magnétique en tôle découpée ou en deux blocs frittés, les aimants étant introduits entre deux demi-stators. Il n'est pas prévu d'encoches fermées pour loger ces aimants.

De son côté, le US-A-4 141 137 utilise des blocs aimantés solidaires qui sont cimentés par une résine époxy contre des faces en regard de la pièce polaire. Ici non plus, on ne trouve pas d'encoches fermées pour le logement de plaquettes aimantées.

Pour en revenir à la présente invention, des essais effectués avec des moteurs électriques ayant un tel inducteur statorique ont révélé que, si le fait de conserver un flux constant élevé procure un fonctionnement satisfaisant jusqu'à des vitesses de l'ordre de 3000 tr/mn, il n'en est plus de même pour des vitesses supérieures, à cause de l'échauffement exagéré de l'induit dû à l'augmentation importante des pertes fer dans les tôles du rotor, pertes liées à la vitesse et à l'importance du flux. Le rendement décroît alors rapidement et en outre la tension entre les lames du collecteur peut devenir prohibitive à grande vitesse puisque, à flux constant, l'augmentation de vitesse s'obtient par accroissement de la tension d'induit.

Aussi la présente invention a-t-elle également pour objet une variante de réalisation perfectionnée de l'inducteur statorique qui a été défini plus haut et qui:

— conserve, dans la plage des basses vitesses (par exemple de 0 à environ 3000 tr/mn), les avantages d'un moteur à flux élevé (couple constant et important),

— permettre d'atteindre des vitesses supérieures (par exemple 6000 tr/mn) sans augmentation prohibitive des pertes fer et de la tension d'alimentation (dans la plage allant de 3000 à 6000 tr/mn, le fonctionnement pourrait être à puissance constante),

— maintienne un rendement élevé quel que soit le régime.

A cet effet et conformément au perfectionnement évoqué, on remplace un ou plusieurs pôles permanents à plaquettes aimantées logées dans des fentes par un pôle bobiné classique respectif de façon à doter la machine électrique d'un inducteur hybride qui peut avoir avantageusement une succession alternée de pôles à aimants permanents et de pôles bobinés formant une répartition polaire régulière, selon une technique ancienne illustrée notamment par le brevet français BIGNON N° 1 407 904 délivré le 28 Juin 1965.

Cet inducteur hybride permet, grâce à son ou ses pôles bobinés offrant une faculté de variation d'ampères-tours, de réduire le flux dans la plage critique des grandes vitesses, supprimant ainsi — ou du moins réduisant notablement — les inconvénients signalés plus haut, la présence de pôles permanents au côté de pôles bobinés permettant de réduire les pertes dues à l'excitation, celles-ci se limitant à ces derniers.

La description qui va suivre en regard des dessins annexés, donnée à titre d'exemple non limitatif, fera bien comprendre comment l'invention peut être réalisée.

La figure 1 est une vue schématique en plan d'un inducteur statorique du moteur quadripolaire, aménagé selon un mode de réalisation de la présente invention.

Les figures 2, 3 et 4 sont des vues analogues illustrant respectivement trois variantes de réalisation rentrant dans le cadre de la présente invention.

La figure 5 est une vue schématique en plan d'une tôle découpée de l'empilage statorique conforme à une mode de réalisation préféré de la présente invention, cette tôle étant représentée en position autour du rotor du moteur électrique.

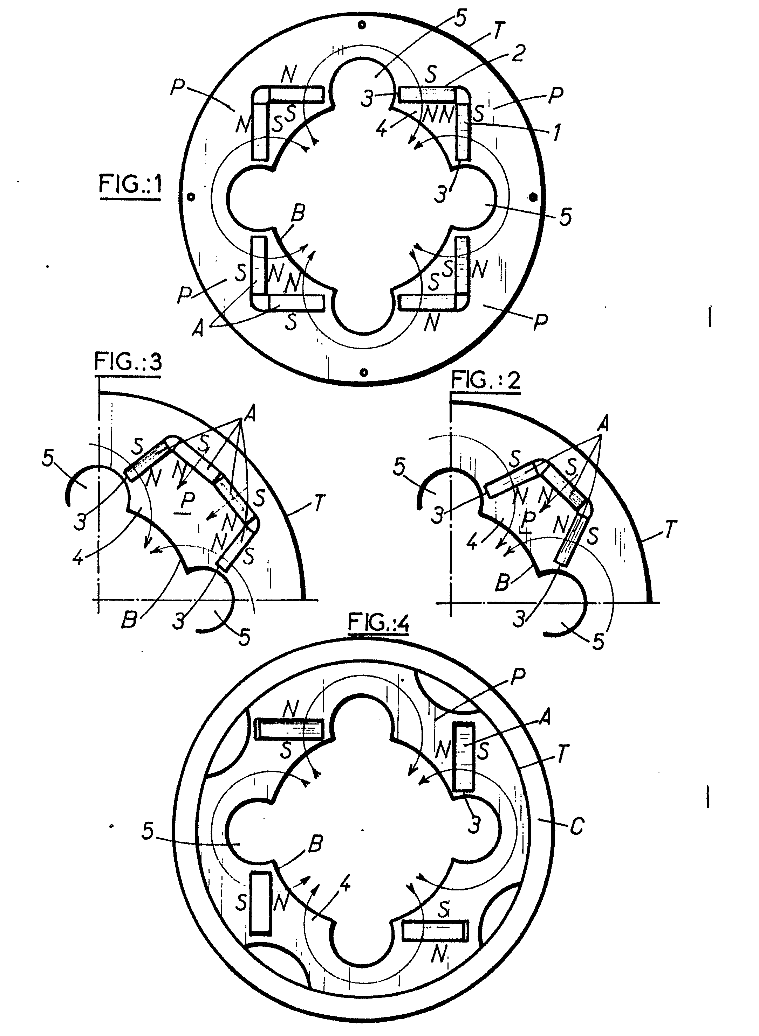

L'inducteur statorique, dans ses diverses variantes représentées sur les figures 1 à 4 et afférentes à un moteur électrique à quatre pôles P, est constitué comme à l'accoutumée d'un empilage de tôles T en métal magnétique découpées en forme générale de couronne dont le bord interne B délimite vers l'extérieur l'entrefer cylindrique, lequel est délimité vers l'intérieur par le rotor (non représenté) de la machine électrique.

Selon la présente invention, on a pratiqué dans ces tôles T des fentes servant de logement à une juxtaposition d'aimants permanents A qui sont formés de plaquettes rectangulaires magnétisées et qui engendrent le flux magnétique inducteur de la machine. Les diverses variantes illustrées se distinguent les unes des autres par la configuration géométrique de ces fentes.

Dans le mode de réalisation de la figure 1, chacun des quatre pôles P du moteur présente dans son axe une fente à configuration en V dont l'angle s'ouvre en direction du bord B de l'entrefer, les branches plus ou moins orthogonales du V étant formées de deux encoches rectangulaires 1, 2 se rejoignant au sommet du V et se terminant par ailleurs à proximité immédiate du bord B de l'entrefer, ne réservant que de très étroits isthmes 3, 3 de matière dans la tôle T. La largeur de chaque encoche 1, 2 est sensiblement égale à celle des plaquettes aimantées A qui y sont logées.

Les pôles successifs P sont séparés par des profondes échancrures 5 définissant géométriquement des zones neutres et restreignant le passage des flux de fuites magnétiques interpolaires.

Un certain nombre de tôles T ainsi découpées sont empilées et maintenues entre elles par tout moyen adéquat de façon à former un paquet de fer statorique. L'alignement des encoches 1, 2 constitue alors, dans chaque pôle P, deux logements dans lesquels sont introduites des plaquettes d'aimant A de préférence déjà magnétisées, de telle sorte que les faces tournées vers l'entrefer soient de même polarité, pour former un pôle de même nom au niveau de l'épanouissement 4, les pôles consécutifs le long de l'entrefer étant bien entendu de polarité alternée.

On notera que les étranglements que constituent les isthmes de matière 3 de très faible largeur, obligent le flux magnétique engendré par les plaquettes aimantées A à passer essentiellement par les épanouissements polaires 4 et l'entrefer, c'est-à-dire le parcours utile illustré par les flèches, sans dérivation substantielle de court-circuit dans la matière des tôles T. Un calcul élémentaire de résistance des matériaux établit qu'une aussi faible réserve de matière en 3 n'est possible que dans l'immobilité statorique, en l'absence de toute force centrifuge.

On notera également que l'étendue linéaire totale des enchoches 1, 2 remplies de plaquettes aimantées A, est nettement plus grande que l'étendue de l'épanouissement polaire 4 bordant l'entrefer, d'où une surface active d'aimants bien supérieure à la surface utile d'entrefer et par conséquent un effet notable de concentration de flux magnétique permettant d'obtenir une induction plus élevée dans l'entrefer. Cet effet concentrateur de flux est d'ailleurs d'autant plus prononcé que les parcours depuis les encoches magnétiques 1, 2 jusqu'à l'épanouissement polaire 4 se font selon des rayons décroissants en raison de la situation externe (par rapport à l'entrefer) du stator, ce qui n'est évidemment pas le cas du rotor (non représenté) qui, étant interne (toujours par rapport à l'entrefer), verrait les parcours en question se faire au contraire selon des rayons croissants.

Il n'est d'ailleurs nullement impératif de combler tous les logements 1-2 par des plaquettes aimantées A et l'on pourrait fort bien, si l'on voulait réduire sensiblement le prix de revient de la machine, ne remplir de plaquettes aimantées que les logements d'un pôle sur deux et se contenter d'un remplissage de fer pour le pôle suivant.

A l'invesre, on peut accroître la longueur efficace des fentes en les constituant de plus de deux encoches telles que 1, 2 de la figure 1.

Ainsi, les figures 2 et 3 montrent respectivement des variantes à trois et quatre encoches consécutives à contour polygonal en U s'ouvrant toujours en direction du bord d'entrefer B et ne laissant subsister en bout que des isthmes 3, 3 très étroits.

La figure 4 montre une variante économique permettant le réalisation de moteurs de faible encombrement, avec une seule plaquette A par pôle P, plus épaisse que les plaquettes minces précédentes mais néanmoins moins chère que deux plaquettes minces. Dans ce cas, la culasse éventuelle C doit être en matériau amagnétique.

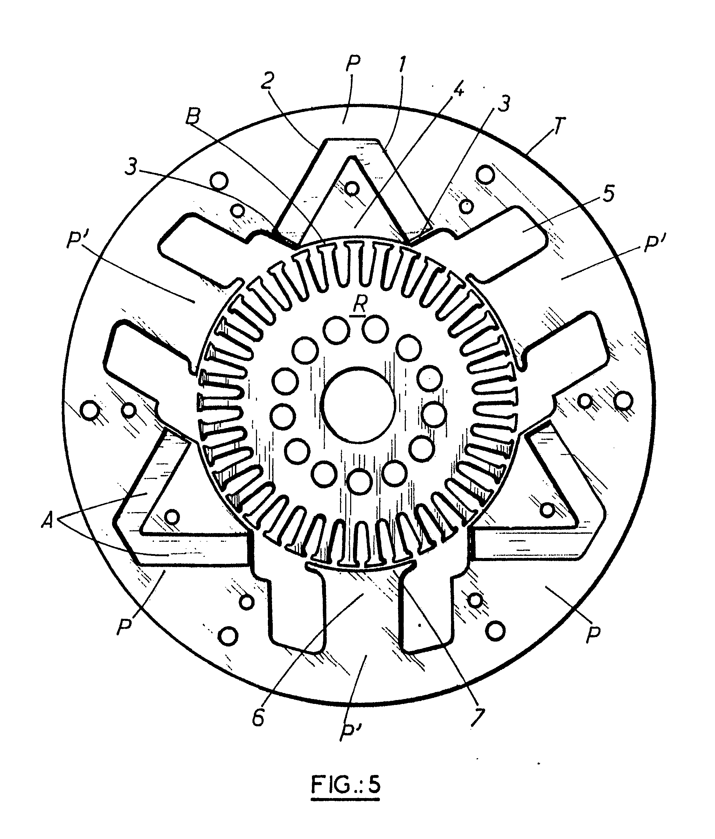

Le mode de réalisation perfectionné illustré par la figure 5 se rapproche de celui décrit plus haut en premier.

On y retrouve ainsi les pôles permanents P (ici au nombre de trois et à 120°C les uns des autres) obtenus par empilage des tôles poinçonnées identiques T délimitant avec le rotor R l'entrefer cylindrique B. Comme précédemment, chaque pôle permanent P présente dans son axe une fente à configuration en V s'ouvrant vers l'entrefer B e dont les branches sont formées de deux encoches rectangulaires 1, 2 se rejoignant au sommet du V et se terminant par ailleurs à proximité immédiate de l'entrefer B, ne réservant que de très étroits isthmes 3, 3 de matière dans la tôle T aux extrémités des épanouissements polaires 4 bordés par les échancrures interpolaires 5. Dans ces fentes 1, 2 sont logées les plaquettes aimantées A qui engendrent le flux magnétique permanent du moteur.

Entre les pôles permanents P à plaquettes aimantées A et conformément au perfectionnement visé sont intercalés des pôles bobinés P'.

A cet effet, la découpe de la tôlerie T par poinçonnage comporte, outre les fentes à contour polygonal 1, 2 destinées au logement des aimants permanents A, telles que décrites précédemment, des dents polaires 6 munies chacune d'un épanouissement polaire 7 et qui, après empilage, constitueront les noyaux polaires de P'.

L'inducteur peut comporter, selon le fontionnement désiré, un seul ou plusieurs pôles bobinés P'. Dans l'exemple illustré sur la figure 5. le moteur comporte six pôles qui sont alternativement permanents P et bobinés P'.

L'excitation des pôles bobinés P' crée un flux qui s'ajoute généralement à celui qui est engendré par les aimants permanents A, mais qui peut éventuellement être nul ou même soustractif pour réduire le flux total dans le rotor R.

Plus précisément, on pilotera l'excitation des pôles bobinés P' selon le régime de rotation du moteur qu'on peut subdiviser en trois plages:

1°) Pour les basses vitesses (par exemple de 0 à 3000 tr/mn), on opère à couple constant, les ampères-tours des pôles bobinés P' — qui sont additifs vis-à-vis du flux produit par les pôles permanents P — étant au maximum afin d'avoir un courant d'induit minimum. La vitesse du moteur varie alors comme la tension appliquée au collecteur.

2°) Pour les vitesses plus élevées (par exemple de 3000 à 5000 tr/mn) que l'on ne peut atteindre en continuant à augmenter la tension d'alimentation sous peine d'étincelles au collecteur et de chute de rendement, on opère à puissance constante en réduisant progressivement le flux par réduction des ampères-tours des pôles bobinés P' depuis leur maximum [par exemple à 3000 tr/mn comme indiqué plus haut sous 1°)] jusqu'à 0 (par exemple à 5000 tr/mn).

3°) Pour les très grandes vitesses (par exemple de 5000 à 6000 tr/mn), on opère toujours à puissance constante, mais en inversant alors les ampères-tours des pôles bobinés P' pour venir en soustraction du flux engendré par les pôles permanents P. On ne peut évidemment poursuivre trop loin cette inversion des ampères-tours des pôles bobinés P' car on risquerait de démagnétiser les pôles permanents P.

Le pilotage des ampères-tours des pôles bobinés P' qui vient d'être décrit (maintien à leur valeur additive maximum dans un premier régime de basses vitesses, décroissance jusqu'a l'annulation dans un second régime de vitesses intermédiaires et inversion de sens pour les rendre soustractifs dans un troisième régime de grandes vitesses) est aisément assuré par un montage classique de commande du courant d'excitation, à partir d'une dynamo tachymétrique fournissant un signal de vitesse à un détecteur de seuil réglé sur la vitesse de transition désirée (3000 tr/mn dans l'exemple considéré).

Le moteur à inducteur hybride P-P' qui vient d'être décrit en regard de la figure 5 présente des avantages appréciables:

— Optimisation du fonctionnement dans une plage élargie de vitesse;

— Facilité de régulation du flux par pilotage du courant d'excitation en fonction de la vitesse désirée;

— Pas de risque d'emballement du moteur si par accident le courant d'excitation des pôles bobinés P' vient à s'annuler;

— Rendement amélioré par rapport aux solutions traditionnelles, une partie seulement des pôles étant bobinée (réduction des pertes d'excitation).

Il va de soi que les modes de réalisation décrits ne sont que des exemples et qu'on pourrait les modifier, notamment par substitution d'équivalents techniques, sans sortir pour cela du cadre de l'invention.

## Revendications

1. Machine électrique à courant continue à entrefer cylindrique et à excitation permanente obtenue au moyen de plaquettes aimantées, le stator de ladite machine étant formé de tôles empilées, caractérisée en ce que lesdites plaquettes aimantées (A) sont logées dans des fentes (1, 2) à contour polygonal fermé pratiquées dans lesdites tôles empilées (T), ledit contour polygonal arrivant à proximité immédiate de l'une au moins des deux extrémités de la région utile (4) du pôle (P) formant l'entrefer et n'y laissant subsister qu'un isthme de tôle (3) très étroit.

2. Machine électrique selon la revendication 1, caractérisée en ce que chaque fente (1, 2) est constituée d'une suite d'encoches rectangulaires donnant à l'ensemble une configuration en V ou en U dont l'ouverture est orientée vers l'intérieur de la machine en direction de l'épanouissement polaire correspondant (4).

3. Machine électrique selon la revendication 1 ou 2, caractérisée en ce que les plaquettes (A) logées dans les fentes (1, 2) sont de forme rectangulaire plane et viennent remplir les fentes en totalité ou en partie.

4. Machine électrique selon la revendication 1, 2 ou 3, caractérisée en ce qu'on remplace un ou plusieurs pôles permanents (P) à plaquettes aimantées (A) logées dans des fentes (1, 2), par un pôle bobiné respectif (P') de façon à doter la machine électrique d'un inducteur.

5. Machine électrique selon la revendication 4, caractérisée en ce que l'inducteur hybride comporte une succession alternée de pôles à aimants permanents (P) et de pôles bobinés (P') avec répartition polaire régulière.

6. Machine électrique selon la revendication 4 ou 5, caractérisée en ce que chaque tôle (T) de l'empilage statorique est découpée de manière à présenter, outre les fentes à contour polygonal (1, 2) destinées au logement des aimants permanents (A), des dents polaires (6) munies chacune d'un épanouissement polaire (7) et qui, après empilage, constituent les noyaux po-laires (P').

## Patentansprüche

1. Gleichstromelektromaschine, die mit einem zylindrischen Luftspalt vorgesehen ist und eine durch magnetisierte Plättchen erhaltene Dauererregung vorweist, wobei der Stator dieser Maschine aus einem Blechpaket besteht, dadurch gekennzeichnet, dass die magnetisierten Plättchen (A) in Schlitzen (1, 2) mit geschlossenem Linienzug eingesetzt sind, die in diesem Paketblech (T) vorgesehen sind, wobei dieser Linienzug die unmittelbare Nachbarschaft zumindest eine der beiden Enden des Wirkungsbereichs (4) des den Luftspalt bildenden Pols (P) erreicht, wo er nur eine sehr enge Isthmus bestehen lässt.

2. Elektromaschine nach Anspruch 1, dadurch gekennzeichnet, dass jeder Schlitz (1, 2) durch eine Reihe viereckiger Nuten derart geformt wird, dass das Gesamte eine V- oder U-förmige Konfiguration mit nach der Innerseite der Maschine in der Richtung der entsprechenden Polschuhe (4) zugewandte Öffnung vorweist.

3. Elektromaschine nach Anspruch 1 oder 2, dadurch gekennzeichnet, dass die in den Schlitzen (1, 2) eingesetzten Plättchen (A) eine ebene und viereckige Form vorweisen und die Schlitzen völlig oder teilweise erfüllen.

4. Elektromaschine nach Anspruch 1, 2 oder 3, dadurch gekennzeichnet, dass ein oder mehrere in den Schlitzen (1, 2) eingesetzten Dauerpole (P) mit magnetisierten Plättchen (A) durch je ein Spulenpol derart ersetzt sind, dass die elektrische Maschine mit einem Induktor vorgesehen wird.

5. Elektromaschine nach Anspruch 4, dadurch gekennzeichnet, dass der zusammengesetzte Induktor eine abwechselnde Reihenfolge von Dauermagnetpole (P) und Spulenpole (P') mit regelmässiger Polverteilung vorweist.

6. Elektromaschine nach Anspruch 4 oder 5, dadurch gekennzeichnet, dass jedes Blech (T) des Statorblechpakets derart ausgeschnitten wird, dass es, ausser den für das Einsetzen der Dauermagnete (A) bestimmten linienzügigen Schlitzen (1, 2), je mit einer Polschuhe (7) versehenen Polzähne (6), vorweist, die nach ihrer Stapelung die Polkerne (10) bilden.

### Claims

1. Direct current electrical machine provided with a cylindrical air gap and presenting a permanent excitation obtained by means of magnetized platelets, the stator of said machine being formed by stacked sheets, characterized in that said magnetized platelets (A) are housed in slots (1, 2) with a closed polygonal outline managed in said stacked sheets (T), said polygonal outline extending up to the immediate vicinity of at least one of both ends of the effective zone (4) of the pole (P) forming the air gap, whereby only a very narrow isthmus of sheets (3) remains at this place.

2. Electrical machine according to claim 1, characterized in that each slot (1, 2) is formed by a succession of rectangular notches, the whole presenting the outline of a V or U with its openings oriented towards the inner part of the machine in the direction of the corresponding pole shoe (4).

3. Electrical machine according to claim 1 or 2, characterized in that the platelets (A) housed in the slots (1, 2) present a plane rectangular shape and fill the slots wholly or partly.

4. Electrical machine according to claim 1, 2 or 3, characterized in that one or more permanent poles (P) with magnetized platelets (A) housed in slots (1, 2) are replaced by a corresponding wire-wounded pole (P') so as to provide the electrical machine with an inductor.

5. Electrical machine according to claim 4, characterized in that the composite inductor comprises an alternate succession of poles with permanent magnets (P) and wire-wounded poles (P'), whereby the polar repartition is regular.

6. Electrical machine according to claim 4 or 5, characterized in that each sheet (T) of the stack of the stator is cut out so as to comprise, besides the slots with a polygonal outline (1, 2) which are provided for the housing of the permanent magnets (A), polar teeth (6) each of which is provided with a polar shoe (7) and which form the polar cores (P') when they are stacked.

FIG.:1

FIG.:3

FIG.:2

FIG.:4

FIG.: 5